# FASCICULE DE BREVET EUROPEEN

(11) **EP 3 426 950 B1**
(45) Date de publication et mention de la délivrance du brevet: **22.01.2025**
(21) Numéro de dépôt: 17707615.5
(22) Date de dépôt: 02.02.2017
(51) Int. Cl.: F16H 57/04

(54) **BOITE DE VITESSES COMPORTANT UNE CANULE D'ALIMENTATION FIXE**
GETRIEBE MIT EINER STATIONÄREN ZUFÜHRKANÜLE
TRANSMISSION COMPRISING A STATIONARY FEEDING CANNULA

(30) Priorité: 10.03.2016 FR 1652013
(43) Date de publication de la demande: 16.01.2019
(73) Titulaire: Renault s.a.s, 92100 Boulogne Billancourt (FR); NISSAN MOTOR CO., LTD., Yokohama-shi, Kanagawa 221-0023 (JP)
(72) Inventeur: VALLET, François-Xavier, 92100 Boulogne Billancourt (FR); VILLIERS, Flavien, 91700 Villiers Sur Orge (FR)
(74) Mandataire: Renault Group
(86) Numéro de dépôt international: PCT/FR2017/050227
(87) Numéro de publication internationale: WO 2017/153647

(56) Documents cités:
- FR-A1- 2 888 909
- US-A1- 2009 221 391

## Description

La présente invention concerne la lubrification d'un arbre creux, et d'un ensemble de pignons de boîte de vitesses.

Plus précisément, elle a pour objet une boîte de vitesses selon la revendication 1.

La lubrification des boîtes de vitesses se fait généralement par bain d'huile. Le lubrifiant est projeté dans toute la boîte par la mise en rotation des éléments mécaniques de la boîte, en particulier par la couronne du différentiel. Les pignons sont lubrifiés par projection directe. Les arbres sont souvent creux, l'huile circulant alors à l'intérieur de ces derniers.

La présence d'une machine électrique supplémentaire augmente la hauteur totale d'une boîte de vitesses hybride par rapport aux boîtes de vitesses classiques. Dans ces conditions, l'huile peut difficilement être projetée sur toute la hauteur de la boîte, surtout à basse vitesse. La projection d'huile à l'intérieur de la boîte n'est alors plus suffisante pour répondre aux exigences de lubrification.

Par la publication FR 2 877 065, on connaît un dispositif de lubrification forcé de roues d'engrenages, comprenant une canule d'alimentation fixe, logée à l'intérieur d'un arbre creux et percés de trous de lubrification ciblés sur les pignons.

La publication FR 2 888 909 décrit une autre boîte de vitesses, dans laquelle l'huile atteint l'entrée d'un dispositif de lubrification intérieur, par projection à l'intérieur de la boîte.

Dans certaines architectures hybrides, la disposition adoptée pour assurer simultanément l'entrée de mouvement d'un moteur thermique et d'une machine électrique de traction, sur la ligne primaire de la boîte, est d'emmancher deux arbres concentriques, en les fixant respectivement au moteur thermique et à la machine électrique. Lorsque les deux sources motrices sont disposées aux deux extrémités de la ligne primaire, il n'y a plus d'ouverture disponible pour faire entrer huile dans une canule de lubrification.

La présente invention vise à assurer la lubrification intérieure d'un arbre creux de boîte de vitesses, lorsque les extrémités de cet arbre ne sont pas accessibles à partir de l'intérieur de la boîte, pour introduire de l'huile dans une canule d'alimentation forcée.

Dans ce but, elle propose que l'entrée de la canule reçoive l'huile d'un circuit extérieur de lubrification, à travers une ouverture du carter.

Dans un mode de réalisation particulier de l'invention, l'arbre creux renferme un arbre plein concentrique à celui-ci, qui porte des pignons, et présente un perçage intérieur en liaison étanche avec une sortie de la canule.

La boîte de vitesses proposée par l'invention, comporte un tel dispositif de lubrification.

Cette solution est applicable pour lubrifier tout arbre creux, dont l'entrée n'est pas facilement accessible. Toutefois, elle trouve une application privilégiée sur des boîtes de vitesses hybrides, avec des arbres primaires emmanchés, reliés au moteur thermique et à une machine électrique.

La présente invention sera mieux comprise à la lecture de la description suivante d'un mode de réalisation non limitatif de celle-ci, en se reportant aux dessins annexés, sur lesquels :
- les figure 1A et 1B sont deux vues d'ensemble extérieures de la même boîte, dans des orientations différentes.
- la figure 2 est une section partielle de la boîte, et
- les figures 3A et 3B montrent l'arbre plein, et l'arbre creux de la boîte, avec la canule.

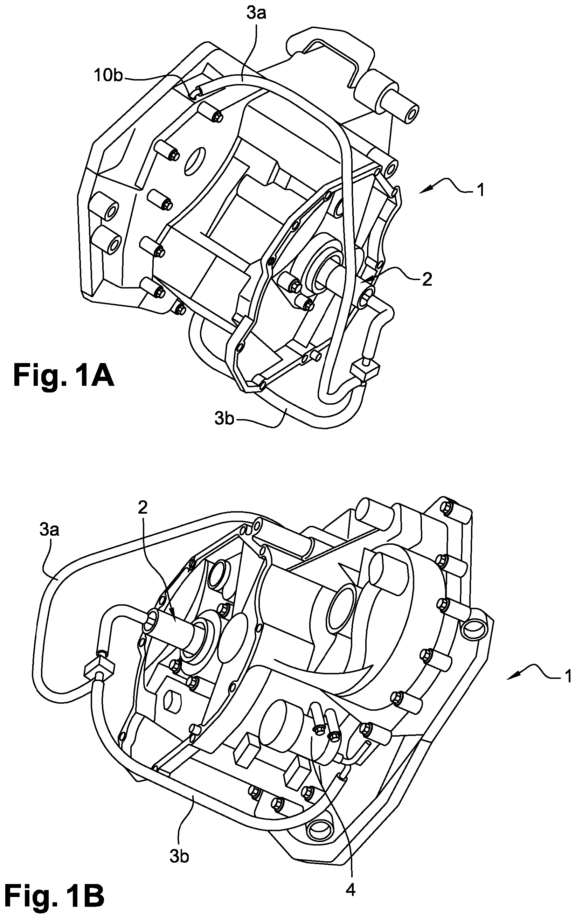

Le système de lubrification illustré par les figures 1A et 1B permet d'amener la quantité d'huile désirée à l'intérieur de la ligne primaire 2 de la boîte 1, par deux conduits : un premier conduit 3a en partie haute de la boite de vitesse, et un deuxième conduit 3b au niveau de la ligne primaire 2. Une pompe extérieure 4, fait circuler l'huile dans ce circuit, à l'extérieur de la boîte de vitesse. Elle met en circulation d'huile contenue dans la partie inférieure de la boîte. Cette pompe est de préférence électrique afin de la piloter facilement en fonction de la vitesse de rotation des différents arbres et des besoins de lubrification.

La boîte dispose ainsi d'une entrée d'huile 10b en partie supérieure, et d'une autre entrés d'huile au niveau de sa ligne primaire. Le circuit extérieur comprend la pompe 4, mettant en circulation d'huile contenue dans la partie inférieure de la boîte 1, et les conduits 3a, 3b : le conduit 3b relié à l'entrée de la canule, et le conduit 3a relié à un point d'entrée de la boîte 10b plus élevé que l'arbre creux 7. Dans l'exemple non limitatif qui est décrit, la pompe 4 est située à l'extérieur du carter. Dans le cadre de l'invention, elle peut aussi se trouver à l'intérieur de la boîte 1.

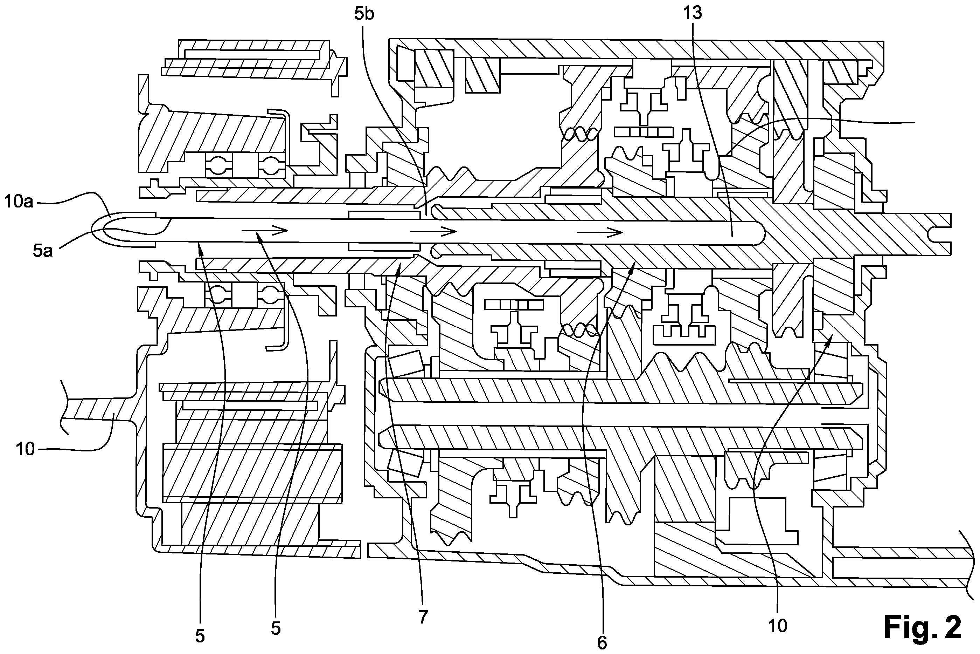

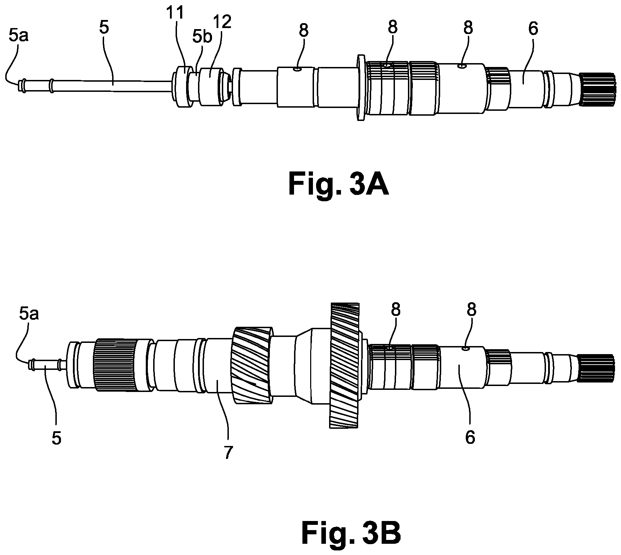

La même boîte de vitesses 1, en section sur la figure 2, comporte un arbre primaire plein 6 et un arbre primaire creux 7 concentriques. Le dispositif de lubrification proposé comprend une canule 5, dont l'extrémité apparaît aussi sur les figures 3A et 3B. La canule 5 permet d'amener l'huile de l'extérieur de la boîte de vitesse vers l'intérieur des arbres à lubrifier 6 et 7. L'entrée 5a de la canule reçoit l'huile du circuit extérieur de lubrification, au travers d'une ouverture 10a du carter 10.

Les deux arbres 6, 7 sont les arbres primaires concentriques de la boîte 1, reliés respectivement au moteur thermique et à une machine électrique (non représentés). Le dispositif proposé est destiné à lubrifier la boîte 1, au travers de l'arbre creux 7 interne au carter 10 de la boîte : ce dispositif comporte la canule d'alimentation fixe 5 qui s'étend à l'intérieur de l'arbre creux 7. L'arbre plein 6 présente un perçage longitudinal intérieur 13, qui fait suite à la canule 5. Le perçage 13 est en liaison étanche avec la canule 5, et dispose de trous de lubrification ciblés 8, situés par exemple sous les pignons de vitesses 9. Les trous 8 sont visibles sur les figures 3A et 3B. La canule 5 est fixée sur le carter 10 de la boîte. Elle est engagée à l'intérieur de l'arbre creux 7.

Sur la figure 3A, on voit la canule 5 et l'arbre plein 6, sans l'arbre creux. Sur la figure 3B on voit l'arbre creux qui recouvre partiellement la canule 5 et l'arbre plein 6. L'extrémité de sortie 5b de la canule faisant face au perçage longitudinal 13 de l'arbre plein 6, est ouverte, pour que l'huile pénètre dans l'arbre plein 6. L'extrémité 5b de la canule porte un joint d'étanchéité 11 et un roulement de guidage 12 dans l'arbre creux, qui assurent la liaison de la canule 5 avec ce dernier.

Comme indiqué plus haut, la canule 5 est alimentée en huile par la pompe grâce au conduit 3b. L'entrée de la canule reçoit l'huile du circuit extérieur de lubrification par ce conduit, au travers de l'ouverture 10a du carter. La pompe 4 alimente simultanément le conduit 3a pour lubrifier la partie haute de la boîte, le conduit 3b pour alimenter la canule 5. Cette double alimentation permet d'optimiser la lubrification globale de toute la boîte de vitesses. L'acheminement de l'huile sur des points de lubrification ciblés, permet d'optimiser le rendement mécanique de la boite. En amenant l'huile directement aux endroits où elle est nécessaire, on peut en effet abaisser la quantité d'huile totale nécessaire dans la boîte. La diminution du volume d'huile réduit les frottements dans la boîte, et améliore son rendement.

## Revendications

1. Boîte de vitesses (1) comportant dans un carter un arbre primaire creux (7) et un arbre primaire plein (6) concentriques, et un dispositif de lubrification qui comprend d'une part une canule d'alimentation (5) vers des points de lubrification (8) ciblés de la boîte, cette canule étant fixée sur le carter de la boîte (1) et s'étendant à l'intérieur de l'arbre creux (7), et d'autre part un circuit de lubrification (3a, 3b) extérieur à la boîte de vitesses (1), dispositif dans lequel l'entrée (5a) de la canule (5) reçoit l'huile provenant du circuit extérieur (3a, 3b), à travers une ouverture (10a) du carter, **caractérisée en ce que** le circuit extérieur comprend une pompe (4) mettant en circulation d'huile contenue dans la partie inférieure de la boîte de vitesses (1), un premier conduit (3) relié à l'entrée (5a) de la canule, et un deuxième circuit (3a) relié à un point d'entrée (10b) de la boîte de vitesses plus élevé que l'arbre creux (7).

2. Boîte de vitesses selon la revendication 1, **caractérisée en ce que** l'arbre creux (7) renferme un arbre plein (6) concentrique à celui-ci, qui porte des pignons et présente un perçage intérieur (13) en liaison étanche avec la sortie (5b) de la canule.

3. Boîte de vitesses selon la revendication 2, **caractérisée en ce que** l'arbre plein (6) présente des trous de lubrification (8) de pignons (9).

4. Boîte de vitesses selon la revendication 3, **caractérisée en ce que** l'extrémité (5b) de la canule faisant face à l'arbre plein (6) porte un joint d'étanchéité (11) et un roulement de guidage (12) dans l'arbre creux, qui assurent la liaison de la canule (5) avec ce dernier.

## Patentansprüche

1. Getriebe (1), das in einem Gehäuse eine hohle Primärwelle (7) und eine konzentrische Vollwelle (6) aufweist, und eine Schmiervorrichtung, die einerseits eine Futterkanüle (5) zu gezielten Schmierstellen (8) des Getriebes, wobei diese Kanüle am Gehäuse des Getriebes (1) befestigt ist und sich in das Innere der Hohlwelle (7) erstreckt, und andererseits einen außerhalb des Getriebes (1) liegenden Schmierkreislauf (3a, 3b) umfasst, Vorrichtung, bei der der Eingang (5a) der Kanüle (5) das Öl aus dem äußeren Kreislauf (3a, 3b) durch eine Öffnung (10a) des Gehäuses aufnimmt, **dadurch gekennzeichnet, dass** der äußere Kreislauf eine Pumpe (4) umfasst, die das im unteren Teil des Getriebes (1) enthaltene Öl zirkulieren lässt, eine erste Leitung (3), die mit dem Eingang (5a) der Kanüle verbunden ist, und einen zweiten Kreislauf (3a), der mit einem Eingangspunkt (10b) des Getriebes verbunden ist, der höher liegt als die Hohlwelle (7).

2. Getriebe nach Anspruch 1, **dadurch gekennzeichnet, dass** die Hohlwelle eine zu ihr konzentrische Vollwelle (6) umschließt, die Zahnräder trägt und eine Innenbohrung (13) aufweist, die mit dem Ausgang (5b) der Kanüle in dichter Verbindung steht.

3. Getriebe nach Anspruch 2, **dadurch gekennzeichnet, dass** die Vollwelle (6) Schmierbohrungen (8) für Ritzel (9) aufweist.

4. Getriebe nach Anspruch 3, **dadurch gekennzeichnet, dass** das der Vollwelle (6) zugewandte Ende (5b) der Kanüle eine Dichtung (11) und ein Führungslager (12) in der Hohlwelle trägt, die die Verbindung der Kanüle (5) mit der Hohlwelle sicherstellen.

## Claims

1. Gearbox (1) comprising, in a casing, a hollow primary shaft (7) concentric to a solid shaft (6), and a lubricating device comprising, on the one hand, a cannula (5) for supplying targeted lubrication points (8) of the gearbox, said cannula being fixed to the casing of the gearbox (1) and extending inside the hollow shaft (7), and, on the other hand, a lubricating circuit (3a, 3b) external to the gearbox (1),said lubricating device in which the inlet (5a) of the cannula (5) receives oil from the external circuit (3a, 3b) through an opening (10a) in the housing, **characterized in that** the external circuit comprises a pump (4) circulating the oil contained in the lower part of the gearbox (1), a first duct (3) connected to the inlet (5a) of the cannula, and a second circuit (3a) connected to an inlet point (10b) of the gearbox higher than the hollow shaft (7).

2. Gear according to claim 1, **characterized in that** the hollow shaft surrounds a solid shaft (6) which is concentric with it, carries the gears and has an internal bore (13) in sealed communication with the outlet (5b) of the cannula.

3. Gear according to claim 2, **characterized in that** the solid shaft (6) has lubrication holes (8) for pinions (9).

4. Gear according to claim 3, **characterized in that** the end (5b) of the cannula facing the solid shaft (6) carries a seal (11) and a guide bearing (12) in the hollow shaft connecting the cannula (5) to the latter.
